Europäisches Patentamt

European Patent Office

Office européen des brevets

(19)

(11) **EP 0 518 228 B1**

(12) **EUROPÄISCHE PATENTSCHRIFT**

(45) Veröffentlichungstag und Bekanntmachung des Hinweises auf die Patenterteilung:
**13.11.1996   Patentblatt 1996/46**

(51) Int Cl.⁶: **G02F 1/01**, G02F 1/21

(21) Anmeldenummer: **92109528.7**

(22) Anmeldetag: **05.06.1992**

(54) **Abstimmbares optisches Filter**

Adjustable optical filter

Filtre optique accordable

(84) Benannte Vertragsstaaten:
**DE FR GB IT NL SE**

(30) Priorität: **13.06.1991   DE 4119461**

(43) Veröffentlichungstag der Anmeldung:
**16.12.1992   Patentblatt 1992/51**

(73) Patentinhaber: **Hartmann & Braun Akfiengesellschaft
D-60484 Frankfurt am Main (DE)**

(72) Erfinder:
• **Füller, Walter
   W-6466 Gründau 4 (DE)**
• **Horn, Bertold, Dr.
   W-6382 Friedrichsdorf (DE)**
• **Liedtke, Thomas
   W-6370 Oberursel (DE)**

• **Moede, Michael
   W-6000 Frankfurt 50 (DE)**
• **Zöchsbauer, Michael
   W-6370 Oberursel (DE)**

(74) Vertreter: **Meissner, Peter E., Dipl.-Ing. et al
Meissner & Meissner,
Patentanwaltsbüro,
Postfach 33 01 30
14171 Berlin (DE)**

(56) Entgegenhaltungen:
**EP-A- 0 413 952          DE-A- 3 311 808
US-A- 3 790 250**

• **APPLIED OPTICS Bd. 8, Nr. 6, Juni 1969, Seiten 1125 - 1128 D.C. AUTH 'Exerimental Investigation of hermally Scanned Fabry-Perot Interferometry'**

**Beschreibung**

Die Erfindung betrifft ein thermisch abstimmbares Fabry-Perot Filter nach dem Oberbegriff des Anspruches 1 und geht aus von einem interferumetrischen Analysengerät mit einem elektrooptisch oder thermooptisch abstimmbaren Fabry-Perot Element wie es aus der EP-A-413 952 bekannt ist.

In der Prozeß- und Umweltanalytik haben die spektroskopischen Meßverfahren große Bedeutung. Dementsprechend sind zahlreiche Meßverfahren entwickelt worden, entweder um einzelne Stoffkomponenten bei diskreten Wellenlängen zu messen oder um das ganze Spektrum eines größeren Spektralbereiches zu erfassen. Hierbei ergibt sich häufig die Notwendigkeit, die Wellenlänge über einen bestimmten Spektralbereich abzustimmen. In der klassischen Spektroskopie werden hierzu z.B. Gitter-Monochromatoren oder Interferdmeter verwendet. Neue Technologien und verbesserte Möglichkeiten der Kristallherstellung haben in letzter Zeit zu einer Reihe von neuartigen, kompakten abstimmbaren Filtern geführt. Hier sind besonders piezoelektrisch, elektrooptisch, akustooptisch und magnetooptisch steuerbare optische Filter zu nennen. Im folgenden soll auf einige bekannte abstimmbare optische Filter näher eingegangen werden.

Ein Überblick über verschiedene elektrooptische Materialien und daraus hergestellte abstimmbare Filter wurde von Gunning gegeben [Gunning, W.J.: Electrooptically tuned spectral filters: a review. Optical Engineering, 20 (1981) 6, S.837-845]. Prinzipiell können die elektrooptisch abstimmbaren Filter als doppelbrechendes Filter mit polarisiertem Licht oder als fabry-Perot-Filter betrieben werden. Ein häufig verwendetes Kristallmaterial ist Lithium-Niobat $LiNbO_3$, dessen Brechungsindex sich beim Anlegen eines elektrischen Feldes ändert. Berichtet wurde auch über Flüssigkristall-Filter, deren optische Eigenschaften sich ebenfalls beim Anlegen eines Feldes ändern [Gunning, W.; Pasko, J.; Tracy, J.: A liquid crystal tunable spectral filter: visible and infrared operation. Proc. SPIE, 268 (1981), S. 190-194]. Charakteristisch für alle elektrooptischen Filter ist, daß man ein periodisches Transmissionsspektrum mit Interferenzmaxima und -minima erhält. Der Abstand zwischen zwei Maxima wird als freier Spektralbereich bezeichnet.

Bei der praktischen Anwendung der elektrooptischen Filter ergeben sich die folgenden Probleme. Für die Verschiebung der Durchlaßcharakteristik um einen Betrag, dergleich dem freien Spektralbereich ist, benötigt man bei den elektrooptischen Kristallen relativ hohe Steuerspannungen. Für $LiNbO_3$ beträgt die erforderliche Spannung z.B. 7,4 kV bei 633 nm Wellenlänge bzw. 47 kV bei 4 µm Wellenlänge. Es wurden zwar auch effektivere Materialien untersucht (z.B. Strontium-Barium-Niobat, $Sr_6Ba_4Nb_2O_6$), diese sind jedoch nicht ohne weiteres verfügbar. Die notwendige Hochspannung führt zu relativ aufwendigen Netzteilen, wodurch die Einsetzbarkeit der Filter stark beschränkt wird. Der Einsatz in preiswerten, kompakten Sensoren wird dadurch sogar unmöglich. Ein weiterer Nachteil ist der relativ enge Abstimmbereich, der für viele Anwendungen nicht ausreichend ist.

Die Flüssigkristall-Filter hingegen haben den Vorteil, daß sie nur geringe Steuerspannungen im Volt-Bereich benötigen. Nachteilig ist bei ihnen zum einen, daß die optischen Eigenschaften stark von der Temperatur abhängen. Zum anderen kann das Flüssigkristall-Material z.B. im nahen Infraroten und im Infraroten nur sehr beschränkt eingesetzt werden, da das Material in diesen Bereichen signifikante Absorptionsbanden aufweist.

In einer anderen Veröffentlichung wird ein piezoelektrisch abstimmbares Fabry-Perot-Filter beschrieben [Reay, N.K.; Atherton, P.D.; Hicks, T.R.: A new miniature Fabry-Perot wavelength demultiplexer. Proc. SPIE, 800 (1987), S. 216-219]. Die Anordnung besteht aus zwei teildurchlässigen Spiegeln, deren Abstand mit Piezoelementen variiert werden kann. Bekanntlich müssen die beiden Spiegel in hohem Grade planparallel justiert werden, um eine effektive Funktion des Fabry-Perot-Filters zu gewährleisten. Im vorliegenden Fall geschiehtdiesdurch kapazitive Messung des Abstandes an mehreren Punkten und entsprechende Ansteuerung der Piezoelemente zur Korrektur der Abweichungen. Diese Technik ist relativ aufwendig und macht eine komplizierte Elektronik erforderlich, so daß das piezoelektrisch abstimmbare Filter für den Einsatz in kompakten, preiswerten Analysengeräten bzw. Sensoren nicht in Frage kommt.

An anderer Stelle wurde ein Fabry-Perot-Filter vorgeschlagen, bei dem der Abstand der beiden Spiegel durch ein elektrostatisches Feld abgestimmt wird [Knutti, J.W. Silicon microstructure sensors. Kongreß Sensor 88, 3. Mai 1988, Nürnberg]. Die Anordnung besteht in diesem Fall aus zwei Silizium-Platten, deren Abstand variabel ist. Nachteilig ist auch hier, daß die notwendige Planparallelität durch kapazitive Messung mit vier Elektrodenpaaren und entsprechende Korrektur über ein elektrisches Feld an vier weiteren Elektrodenpaaren hergestellt werden muß. Ein zusätzlicher Nachteil ergibt sich aus der Tatsache, daß die elektrostatische Abstandseinstellung nur einen relativ kleinen Spiegelabstand erlaubt.

Ein akustooptisch abstimmbares Filter AOTF wurde in der Patentschrift EP 0 195 685 A2 beschrieben. In einem geeigneten Kristallmaterial (z.B. Thallium-Arsenid) wird mit Hilfe eines akustischen Transducers, an den eine hochfrequente Spannung angelegt ist, eine akustische Welle erzeugt, die mit der optischen Strahlung im Kristall wechselwirkt. Die Abstimmung der durchgelassenen Wellenlänge erfolgt durch Änderung der Frequenz. Das akustooptisch abstimmbare Filter benötigt somit eine relativ aufwendige Hochfrequenz-Elektronik, so daß die Einsetzbarkeit des Filters in preiswerten, kompakten Analysengeräten bzw. Sensoren sehr eingeschränkt wird.

Bekannt ist weiterhin ein relativ einfach auf gebautes, thermisch abstimmbares Filter [Auth, D.C.: Experimental investigation of thermally scanned Fabry-Perot interferometry. Appl. Optics, 8 (1969) 6, S. 1125-1128]. Es besteht aus einer Quarzplatte, die mit teildurchlässigen Spiegelflächen versehen ist, und ist in einem Thermostaten untergebracht, mit dem eine definierte Temperatur des Filters eingestellt werden kann. Die Anordnung hat jedoch den Nachteil, daß die Ansprechzeiten sehr groß sind, d.h., für die Durchstimmung über einen bestimmten Spektralbereich wird relativ viel Zeit benötigt. Das thermisch abstimmbare Filter ist damit für die schnelle Messung nicht geeignet.

Berichtet wurde auch über ein abstimmbares Silizium-Fabry-Perot-Interferometer [Eichler, H.J.; Heritage, J.P.; Beisser, F.A.: Optical tuning of a silicon Fabry-Perot interferometer by a pulsed 1.06 μm laser. IEEE Journal of Quantum Electronics, 17 (1981) 12, S. 2351-2355]. Auch in diesem Fall erfolgt die Abstimmung thermisch, jedoch diesmal durch Aufheizen mit einem Laserstrahl. Durch den notwendigen Laser ist die Anordnung vergleichsweise aufwendig und damit für den Einsatz in preiswerten, kompakten Analysengeräten bzw. Sensoren nicht geeignet.

In der DE-AS 11 71 530 ist eine Einrichtung zur Lichtmodulation beschrieben, bei der auf einen lichtdurchlässigen Halbleiterkörper ein Lichtstrahl von einer einzigen Wellenlänge d.h. ein monochromatischer Lichtstrahl gerichtet ist, dessen Wellenlänge der Lage der Absorptionskante des verwendeten Halbleiters entspricht. Es ist eine Vorrichtung zum Verändern der Temperatur des Halbleiterstoffes und damit der Lage der Absorptionskante vorgesehen. Die Wellenlänge des zu modulierenden Lichtes ist festgelegt durch die effektive Wellenlänge der Lichtabsorptionskante des zur Verwendung kommenden Halbleiterkörpers. In einer Ausführungsform weist der Halbleiterkörper Elektroden auf, an die eine elektrische Spannung anlegbar ist, die einen Strom durch den Halbleiterkörper fließen läßt und seine Temperatur erhöht.

Der Erfindung liegt die Aufgabe zugrunde, ein abstimmbares optisches Filter unter Verwendung einer elektrisch heizbaren Filterplatte aus Halbleitermaterial zu schaffen, das für den Einsatz in preiswerten, kompakten Analysengeräten bzw. Sensoren geeignet ist und die Nachteile der bisher bekannten und anhand von Beispielen beschriebenen abstimmbaren Filter nicht aufweist. Wesentlich sind hierbei besonders die einfache Herstellung des Filters und der einfache Aufbau der Steuerelektronik.

Die Lösung der Aufgabe gelingt mit den im kennzeichnenden Teil des Anspruchs 1 angegeben kennzeichnenden Merkmalen des abstimmbaren Filters.

Die vorgeschlagene Lösung geht von der Überlegung aus, den freien Spektralbereich des optischen Filters durch direkte elektrische Beheizung thermisch abzustimmen; es besteht aus einer planparallelen Platte, in der durch Interferenz bestimmte Wellenlängen verstärkt werden und andere Wellenlängen ausgelöscht werden. Die Abstimmung der Wellenlänge erfolgtin bekannter Weise durch Änderung der optischen Schichtdicke, die gleich dem Produkt aus Dicke und Brechungsindex ist. Das Material der Filterplatte, das im gewünschten Spektralbereich optisch transparent ist, besitzt eine bestimmte elektrische Leitfähigkeit, so daß beim Anlegen einer elektrischen Spannung an die Filterplatte ein elektrischer Strom durch die Platte fließt. Die Platte erwärmt sich beim Stromdurchgang, wobei sich die optische Schichtdicke ändert.

Als Material für die Filterplatte kommen z.B. dotiertes Silizium oder Germanium infrage. Beide Materialien zeichnen sich dadurch aus, daß sie über einen weiten Spektralbereich im Infraroten transparent sind, daß sie eine geeignete elektrische Leitfähigkeit besitzen und daß sich der Brechungsindex und somit die optische Schichtdicke relativ stark mit der Temperatur ändert. Wählt man die Masse der Filterplatte nicht zu groß, kann eine sehr günstige Ansprechzeit des Filters erreicht werden. Z.B. ändert sich die Temperatur innerhalb von 2 Sekunden um 200 °C, wenn man an eine Siliziumplatte mit 10 Ohm Flächenwiderstand und einer Abmessung von etwa 10x10x0,8 mm eine elektrische Spannung von 50 V anlegt, wobei der Strom auf ca. 1 Ampere begrenzt ist. Nach Beendigung des Abstimmvorgangs läßt man die Filterplatte abkühlen und der aktive Heizvorgang kann erneut beginnen. Die Funktion des optischen Filters soll im folgenden detaillierter betrachtet werden.

Die Transmissionskurve einer planparallelen Fabry-Perot-Platte ergibt sich aus der Airy-Funktion

$$I(\nu) = \cfrac{1}{1 + \cfrac{4R}{(1\text{-}R)^2} \times \sin^2(\frac{\pi\nu}{\Delta\nu})}.$$

Es bedeuten: $I$ ...Transmission, $\nu$ ...Wellenzahl, $R$ ...Reflexionsgrad einer Plattenfläche, $\Delta\nu$ ..freier Spektralbereich = Abstand zwischen zwei Transmissionsmaxima. Wenn $s$ die Plattendicke und $n$ der Brechungsindex ist, ergibt sich der freie Spektralbereich $\Delta\nu$ aus

$$\Delta\nu = \frac{1}{2s \times n}.$$

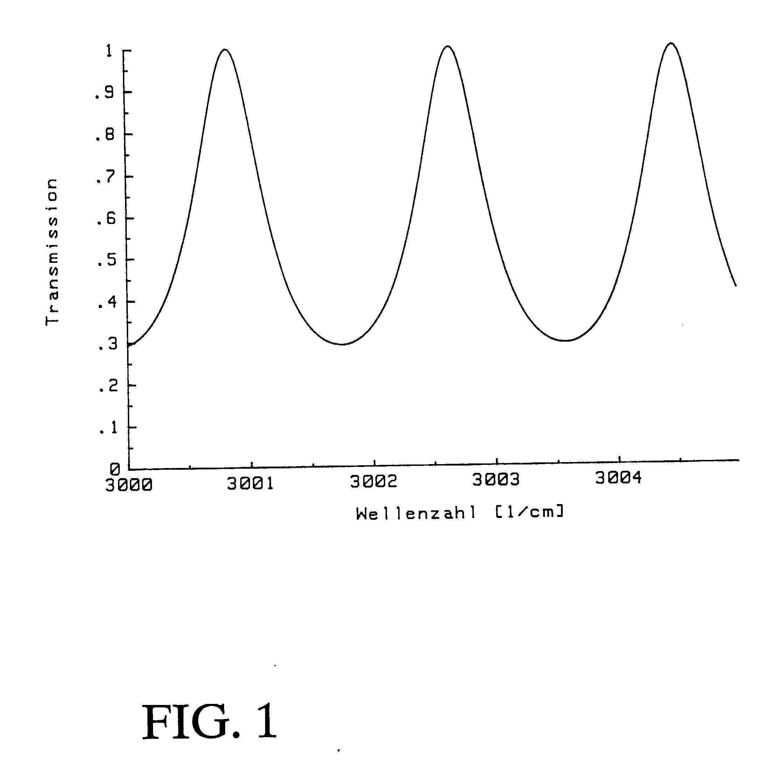

Fig.1 zeigt als Beispiel die Transmissionskurve einer Siliziumplatte mit einer Dicke $s$ = 0,8 mm, einem Brechungsindex $n$ = 3,43 und einem Reflexionsgrad $R$ = 0,3 in Abhängigkeit von der Wellenzahl. Der freie Spektralbereich beträgt in diesem Beispiel 1,822 cm$^{-1}$. Die Temperaturdifferenz, die notwendig ist, um das Transmissionsspektrum um eine Interferenzordnung, d.h. um einen freien Spektralbereich zu verschieben, ergibt sich aus der Gleichung

$$dT_{\Delta v} = \frac{\Delta v \times n}{v \times k_{os}}$$

($k_{os}$ ...Temperaturkoeffizient der optischen Schichtdik-ke).

Für Silizium beträgt der Temperaturkoeffizient der optischen Schichtdicke $k_{os}$ = 174 x $10^{-6}$ $K^{-1}$. Mit einer Wellenzahl $v$ = 3000 $cm^{-1}$ erhält man für Silizium $dT_{\Delta v}$ = 12,0 K, d.h. für die Verschiebung des Spektrums um eine Interferenzordnung wird nur eine Temperaturdifferenz von 12 K benötigt. Für Germanium reduziert sich der Wert auf $dT_{\Delta v}$ = 5,8 K.

Die Erfindung wird anhand der in der Zeichnung schematisch dargestellten Ausführungsbeispiele näher erläutertwerden. Es zeigen

Fig.2 eine Draufsicht mit Schnitt eines absimmbaren Filter,
Fig.3 den Schnitt durch ein mit Peltier-Elementen beheiztes Filter,
Fig.4 und Fig.5 die Draufsicht einer Filterplatte mit Temperatur-Meßelementen.

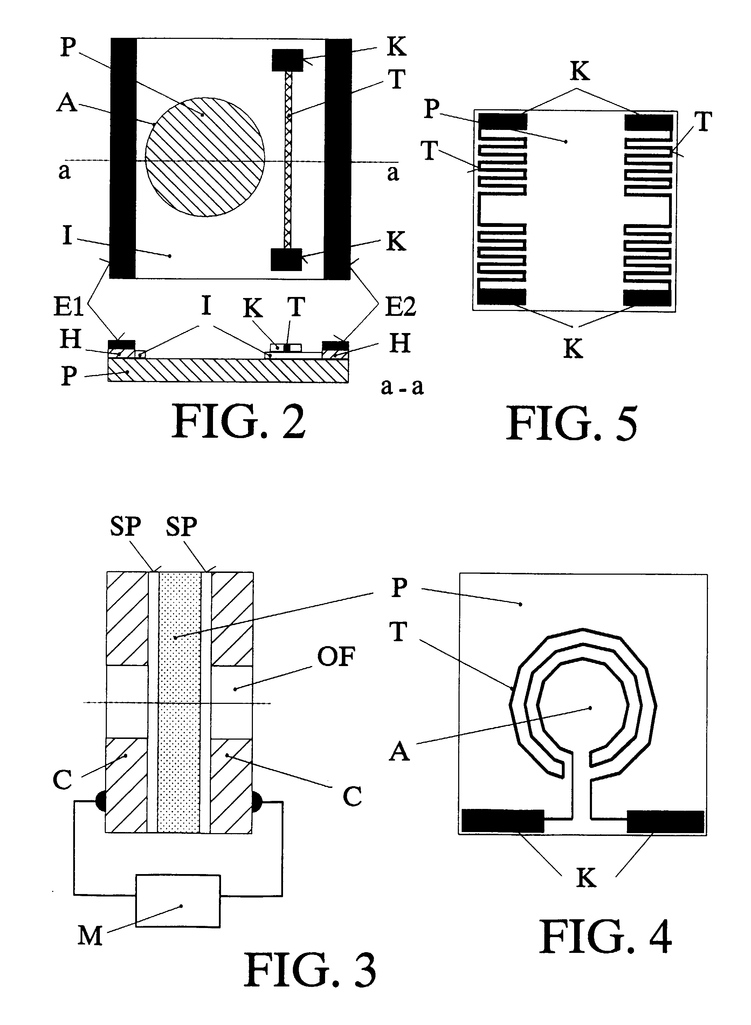

Fig.2 zeigt die Draufsicht und den Schnitt des abstimmbaren Filters, das vorzugsweise aus dotiertem Silizium oder Germanium hergestellt wird. Die Herstellung erfolgt in vorteilhafter Weise in Dünnfilmtechnik mit photolithographischer Strukturierung. Die äußeren Abmessungen der Filterplatte P betragen ca. 10x10 mm, die Plattendicke kann je nach gewünschtem freien Spektralbereich beliebig gewählt werden. Auf zwei gegenüberliegenden Kanten der Filterplatte sind zwei Elektroden E1, E2 angeordnet, an die eine Steuerspannung angelegt wird. Die Elektroden bestehen vorzugsweise aus Gold und können vorteilhaft durch einen Sputterprozeß hergestellt werden, wobei sich zwischen Silizium und Gold optional ein Haftvermittler H, beispielsweise Nickel, befindet. An die Elektroden E1 und E2 schließt sich die elektrisch isolierende Schicht 1 an, die vorzugsweise aus Siliziumnitrit besteht. Die Isolierschicht läßt in der Mitte der Platte die optische Apertur A frei, durch die die abzustimmende Strahlung in das Filter eintritt. Bei Bedarf kann die Apertur A auf beiden Seiten der Filterplatte mit dielektrischen, teildurchlässigen Spiegeln versehen werden. Mit zunehmendem Reflexionsgrad der Spiegel verringert sich hierbei in bekannter Weise die Halbwertsbreite des Transmissionsprofils der Airy-Funktion (s. Fig.1). Auf der Isolierschicht 1 befindet sich ein Dünnfilm-Temperaturmeßelement T, das aus einem Widerstandsmaterial wie z.B. Nickel hergestellt wird. An den Enden weist das Meßelement zwei Kontaktflächen K auf, die vorzugsweise aus Gold bestehen.

Anstelle der direkten elektrischen Beheizung können auch Peltier-Elemente verwendet werden, die beidseitig auf die Filterplatte gebracht werden. Vorteilhaft ist hierbei die Möglichkeit, Filterplatte nach dem Aufheizen wieder relativ schnell auf die Ausgangstemperatur zu kühlen. Fig. 3 zeigt den schematischen Aufbau einer aus EP-A- 413 952 bekannten Filterplatte mit Peltier-Elementen. Auf der Filterplatte P ist auf jeder Seite ein Peltier-Element C angebracht, das in der Mitte die Öffnung OF für den optischen Strahlungsdurchgang freiläßt. Bei Bedarf kann die Filterplatte P auf beiden Seiten mit dielektrischen Spiegeln SP versehen sein. Die Peltier-Elemente C werden von der Elektronikeinheit M angesteuert, wobei je nach Polarität der angelegten Spannung eine Erwärmung oder eine Abkühlung der Filterplatte erfolgt.

Für den Peltier-Betrieb wird eine modifizierte Filterplatte verwendet. Die Fig. 4 und 5 zeigen zwei Ausführungsbeispiele der Filterplatte für den Peltier-Betrieb.

In Fig. 4 ist die Filterplatte P, die vorzugsweise aus Silizium besteht, mit einem kreisförmigen Temperatur-Meßelement T versehen, das in Dünnfilmtechnik hergestellt wird und vorzugsweise aus Nickel besteht. Zwischen der Siliziumplatte und dem Temperatur-Meßelement T befindet sich eine in der Zeichnung nicht dargestellte Isolierschicht, die z.B. Siliziumnitrit sein kann. An den Enden weist das Temperatur-Meßelement T Kontakte K auf, die vorzugsweise aus Gold bestehen. Innerhalb des Temperatur-Meßelements T liegt die optische Apertur A, die bei Bedarf auf beiden Seiten der Filterplatte P mit dielektrischen Spiegeln versehen sein kann.

Die zweite Variante für den Peltier-Betrieb, Fig.5 zeigt sie, besitzt zwei Temperatur-Meßelemente T mit entsprechenden Kontakten K. Ein Meßelement kann z. B. für die Temperaturmessung und das andere für die Temperaturregelung der Peltier-Elemente verwendet werden.

Anstelle der Temperaturmessung kann die Erfassung der optischen Schichtdicke auch in anderer Weise erfolgen. So ist es z.B. möglich, monochromatisches Licht durch das abstimmbare Filter zu schicken und die optische Schichtdicke direkt anhand der durchlaufenden Interferenzordnungen zu bestimmen.

**Patentansprüche**

1. Thermisch abstimmbares Fabry-Perot Filter mit einer plan-parallelen Platte (P), die aus einem lichtdurchlässigen und elektrisch leitenden oder halbleitenden Material besteht, gekennzeichnet durch zwei Heizelektroden (E1,E2), die so auf der Platte (P) angeordnet sind, daß ein zwischen den Elektroden fließender elektrischer Strom die ganze Filterplatte (P) erwärmt.

2. Thermisch abstimmbares Fabry-Perot Filter nach Anspruch 1, wobei auf der Filterplatte (P) ein Temperatur-Meßelement (T) unmittelbar neben der optischen Apertur (A) des Filters angeordnet ist.

3. Thermisch abstimmbares Fabry-Perot Filter nach Anspruch 2, bei dem die zwei Elektroden, unmittelbar auf das elektrisch leitende Material aufgebracht sind, wobei die Elektroden (E1 und E2) und des Temperatur-Meßelement (T) mit Hilfe der Dünnfilmtechnik auf die Filterplatte (P) aufgetragen sind.

4. Thermisch abstimmbares Fabry-Perot Filter nach Anspruch 2 oder Anspruch 3, wobei sich zwischen der Filterplatte (P) und dem Temperatur-Meßelement (T) eine elektrisch isolierende Schicht (I) befindet.

**Claims**

1. Thermally tunable Fabry-Perot filter with a plane parallel plate (P) which consists of a translucent and electrically conducting or semi-conducting material, characterised by two heating electrodes (E1, E2) which are disposed on the plate (P) so that an electric current flowing between the electrodes heats the entire filter plate (P).

2. Thermally tunable Fabry-Perot filter according to claim 1, in which a temperature measuring element (T) is disposed on the filter plate (P) immediately next to the optical aperture (A) of the filter.

3. Thermally tunable Fabry-Perot filter according to claim 2, in which the two electrodes are applied directly to the electrically conducting material, the electrodes (E1 and E2) and the temperature measuring element (T) being applied to the filter plate (P) with the aid of the thin-film method.

4. Thermally tunable Fabry-Perot filter according to claim 2 or claim 3, in which an electrically insulating layer (I) is located between the filter plate (P) and the temperature measuring element (T).

**Revendications**

1. Filtre Fabry-Pérot thermiquement accordable, comportant une plaque (P) à faces planes et parallèles, qui est constituée d'un matériau transparent et électriquement conducteur ou semi-conducteur, caractérisé par deux électrodes de chauffage (E1,E2), qui sont agencées sur la plaque (P), de sorte qu'un courant électrique circulant entre les électrodes chauffe toute la plaque de filtre (P).

2. Filtre Fabry-Pérot thermiquement accordable selon la revendication 1, un élément de mesure de température (T) étant agencé sur la plaque de filtre (P) directement à côté de l'ouverture optique (A) du filtre.

3. Filtre Fabry-Pérot thermiquement accordable selon la revendication 2, dans lequel les deux électrodes sont appliquées directement sur le matériau électriquement conducteur, les électrodes (E1 et E2) et l'élément de mesure de température (T) étant appliqués sur la plaque de filtre (P) à l'aide de la technique des couches minces.

4. Filtre Fabry-Pérot thermiquement accordable selon la revendication 2 ou la revendication 3, une couche électriquement isolante (I) se trouvant entre la plaque de filtre (P) et l'élément de mesure de température (T).

# FIG. 1

FIG. 2

FIG. 5

FIG. 3

FIG. 4

7